Europäisches Patentamt

European Patent Office

Office européen des brevets

(11) Publication number: **0 161 521**
**B1**

## EUROPEAN PATENT SPECIFICATION

(45) Date of publication of patent specification: **13.07.88**

(21) Application number: **85104670.6**

(22) Date of filing: **17.04.85**

(51) Int. Cl.⁴: **F 16 H 5/60**

(54) Transmission control apparatus.

(30) Priority: **18.04.84 JP 77899/84**

(43) Date of publication of application:
**21.11.85 Bulletin 85/47**

(45) Publication of the grant of the patent:
**13.07.88 Bulletin 88/28**

(84) Designated Contracting States:
**DE FR GB**

(56) References cited:
**EP-A-0 130 812**
**GB-A-1 377 437**
**GB-A-2 060 793**
**GB-A-2 117 068**
**GB-A-2 117 462**
**GB-A-2 119 460**

(73) Proprietor: **HITACHI, LTD.**
**6, Kanda Surugadai 4-chome Chiyoda-ku**
**Tokyo 100 (JP)**

(72) Inventor: **Sasaki, Shoji**
**Sawa-ryo 467, Tabiko**
**Katsuta-shi (JP)**
Inventor: **Tokuda, Hiroatsu**
**203, Minami-Haitsu 3-12-24, Higashiishikawa**
**Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

This invention relates to a transmission control apparatus according to the first portion of the claim. This apparatus is adapted for effecting a speed shift by selecting an optimum one of gears depending on driving conditions of an automotive vehicle, and more particularly to the manner of control in the event of failure of a gear shift and also in the event of detection of an abnormal one among various sensors.

Known transmissions are broadly classified into those of manual type and those of automatic type using torque converters. While the transmission of the automatic type using the torque converter is advantageous in that the driving effort of the driver is lessened. However, it has such disadvantages that the large loss of energy transmission increases the fuel consumption resulting in worsened fuel economy, and, also, the complex construction incurs a high cost. On the other hand, the transmission of the manual type is disadvantageous in that the driving effort of the driven increases, although it has such advantages that the loss of energy transmission is less due to the absence of a torque converter, and, also, the cost is low since the construction is simple compared with the automatic type. In an effort to alleviate the manipulation of the driver driving a vehicle using a transmission of the manual type, a transmission incorporating actuators for attaining gear shifts, that is, a semi-automatic transmission of the manual type, has been proposed. Such a transmission is disclosed in, for example, a magazine entitled "Jidosha Gijutsu (Automobile Technology)" Vol. 37, No. 2, 1983, pp. 134—140. Such a transmission incorporating actuators for attaining gear shhfits is provided with a synchronous meshing mechanism which permits a smooth gear shift even when the rotation speed of a selected gear differs greatly from the rotation speed of the axle. However, the transmission provided with the synchronous meshing mechanism has been defective from the aspect of economy in that the cost increases correspondingly, and, also, the corresponding increase in the weight of the transmission itself results in worsened fuel consumption. However, since the gears can be accurately and smoothly engaged by virtue of the provision of the synchronous meshing mechanism in the transmission of the semi-automatic type, a serious trouble such as breakage of a gear or gears during a gear shift could not occur, and it has been unnecessary to provide any fail-safe function. However, when a transmission not provided with such a synchronous meshing mechanism is to be controlled by a microcomputer, there has been a great possibility of occurrence of a serious trouble such as breakage of a gear or gears due to possible failure of proper engagement of the gears when the rotation speed of a selected gear differs greatly from the rotation speed of the axle. In spite of the great possibility of occurrence of such a serious trouble, any fail-safe function for avoiding danger attributable to such a failure has not been proposed yet.

From the EP—A—0 130 812 it is known a transmission control apparatus comprising rotation speed sensors for measuring the rotation speeds of the output shaft of the transmission and of shift gears. Each clutch gear of the transmission is coupled with a shift bar and will be actuated by actuators. Shift position sensors for sensing the shifted positions of the clutch gears and the shift bars control the actuators in response to the output signals of the rotation speed sensors by a transmission control unit. The clutch gears are automatically restored to the neutral position when completion of the gear shift is not detected upon lapse of a predetermined length of time after starting the shift operation.

It is the object of the invention to provide an apparatus which can control a transmission of the manual type using actuators but not provided with a synchronous meshing mechanism, so that a serious trouble may not occur even in an unusual situation, in which the differences between the rotation speeds of the main shaft and a selected optimum shift gear is too high or in which any one of rotation speed sensors or any one of sensors associated with the actuators is found abnormal.

This object will be solved according to the invention by the characterized features of the claim.

## Brief Description of the Drawings

Fig. 1 is a system diagram showing the construction of a preferred embodiment of the transmission control apparatus according to the present invention.

Fig. 2 shows a program employed in the embodiment shown in Fig. 1.

Fig. 3 is an operation flow chart illustrating the operation of the embodiment shown in Fig. 1.

Fig. 4 is a flow chart showing the steps of processing when any one of the various sensors employed in the embodiment shown in Fig. 1 is found abnormal.

## Description of the Preferred Embodiments

Preferred embodiments of the transmission control apparatus according to the present invention will now be described in detail with reference to the accompanying drawings.

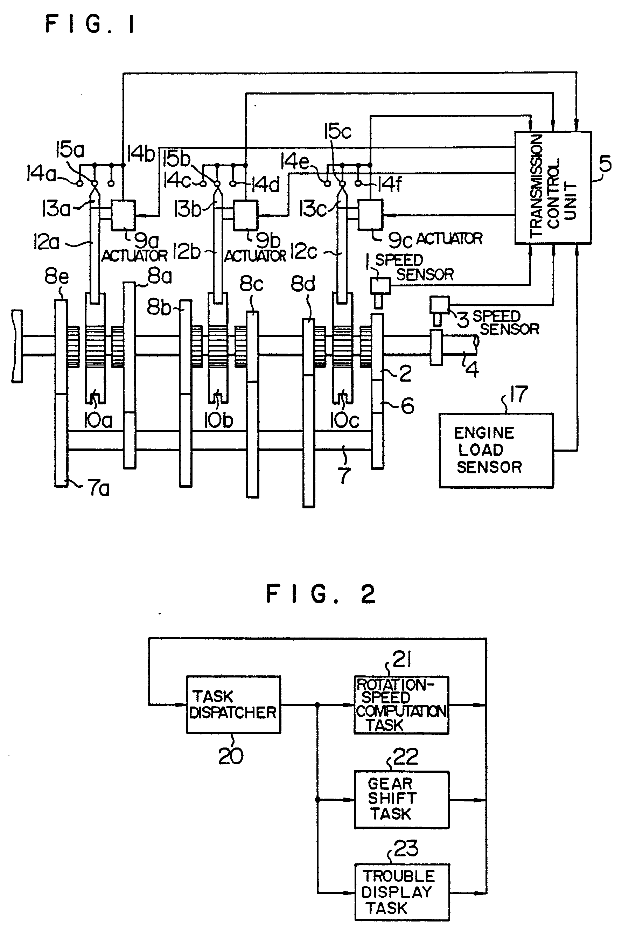

Referring to Fig. 1, a gear 8e is directly coupled to a clutch shaft and engages with a countershaft drive gear 7a mounted on a countershaft 7. Shift gears 8a, 8b, 8c and 8d are maintained in power transmission relation with the gear 8e through the countershaft 7 but are free relative to a main shaft 4. On the other hand, clutch gears 10a, 10b and 10c rotate together with the main shaft 4 and are adapted to be shifted leftward or rightward from the illustrated neutral position to be selectively engageable with the shift gears 8a to 8e.

A reverse-gear rotation-speed sensor 1 is associated with a reverse gear 2 to sense the rotation speed of the reverse gear 2 by well-known electromagnetic means and generates a pulse signal indicative of the rotation speed of the reverse gear 2, this pulse signal being applied to a transmission control unit 5. A main-shaft rotation-speed sensor 3 is associated with the main shaft 4 to sense the rotation speed of the main shaft 4 by well-known means and generates a pulse signal indicative of the rotation speed of the main shaft 4, this pulse signal being applied also to the transmission control unit 5. The pulse periods of the respective pulse signals applied from the sensors 1 and 3 are measured in a manner well known in the art in the transmission control unit 5, so that the rotation speeds of the reverse gear 2 and main shaft 4 are computed respectively. The shift gears 8a to 8e are coupled to the reverse gear 2 at predetermined gear ratios respectively through the countershaft 7 and an idler gear 6. Therefore, when the rotation speed of the reverse gear 2 is computed, the rotation speeds of the individual gears 8a to 8e can be computed by merely multiplying the rotation speed of the reverse gear 2 by the gear ratios respectively. In order that the shift gear 8 whose rotation speed is substantially equal to the rotation speed of the main shaft 4 can be engaged with the corresponding clutch gear 10 to attain the desired gear shift, the transmission control unit 5 applies a control signal to an associated one of actuators 9. Thus, the control signal is applied to the selected actuator 9 for shifting the corresponding clutch gear 10. When the actuator 9 is energized, the corresponding clutch gear 10 is shifted to connect the corresponding shift gear 8 to the main shaft 4 thereby attaining the speed shift. Lugs 13a, 13b and 13c are provided on shifting members 12a, 12b and 12c transmitting the shifting force to the clutch gears 10a, 10b and 10c under acutation by the actuators 9a, 9b and 9c, respectively. These lugs 13a to 13c are associated with shifted position sensors 14a to 14c sensing accurate meshing engagement between the clutch gears 10a to 10c and the shift gears 8a to 8e by turning on switches respectively. The lugs 13a to 13c are also associated with shifted position sensors 15a to 15c sensing that the clutch gears 10a to 10c are in their neutral position, respectively.

Fig. 2 shows a program employed in the present invention. Referring to Fig. 2, the program is divided into sub-programs 21 to 23 called tasks classified according to the functions. These tasks 21 to 23 are executed with respectively different periods under control of another sub-program called a task dispatcher 20. For example, the rotation-speed computation task 21, the gear shift task 22 and the trouble display task 23 are started at time intervals of 10 ms, 20 ms and 40 ms respectively.

According to the rotation-speed computation task 21, the period of the pulse signal generated from the reverse-gear rotation-speed sensor 1 is measured to compute the rotation speed of the reverse gear 2 on the basis of the number of teeth of the reverse gear 2. Further, on the basis of the number of teeth of the idler gear 6 and the numbers of teeth of the gears on the countershaft 7, the rotation speeds of the shift gears 8a, 8b, 8c, 8d, 8e and the rotation speed of the engine are computed to be stored in a memory. Further, on the basis of the output signal of the main-shaft rotation-speed sensor 3, the rotation speed of the main shaft 4 and the speed of the vehicle are similarly computed to be stored in the memory.

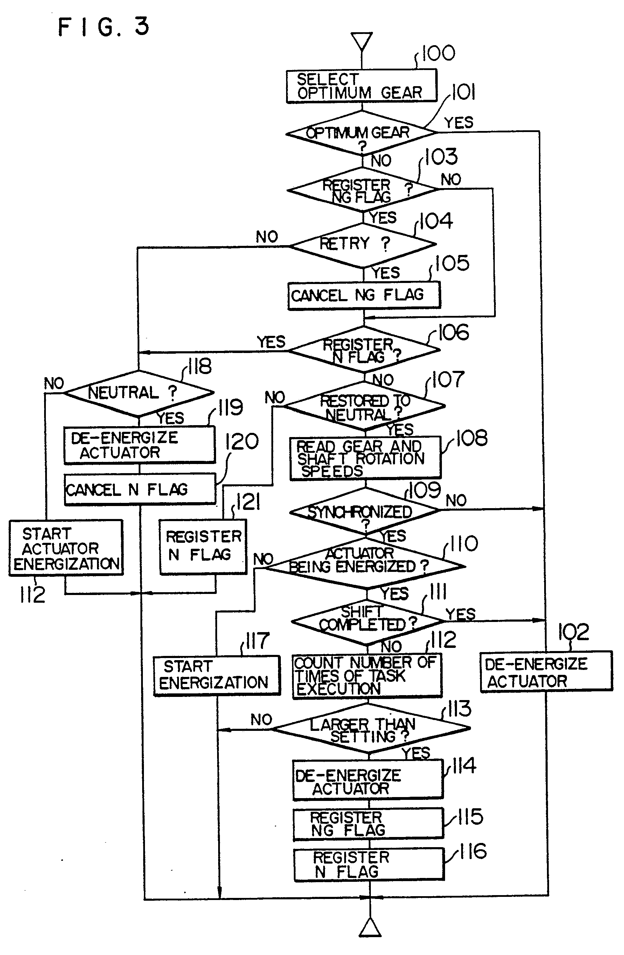

The trouble display task 23 is a task which, when any one of the various sensors such as the reverse-gear rotation-speed sensor 1, main-shaft rotation-speed sensor 3, and shifted position sensors 14a to 14f and 15a to 15c associated with the actuators 9 is found abnormal, displays that such a sensor is abnormal. This is displayed in a manner well known in the art whenever an NG flag is registered in the flow chart shown in Fig. 3.

Fig. 3 shows the details of the gear shift task 22 which selects one of the gears, which is considered most suitable in view of the present driving conditions of the vehicle, and executes the gear shift to the selected gear. The flow chart shown in Fig. 3 also includes the steps of processing executed when, upon lapse of a predetermined length of time after starting of energization of an actuator for attaining a gear shift, the connection of the selected gear 8 with a main shaft 4 is not confirmed by the shifted position sensor associated with the corresponding actuator 9.

The data including the rotation speeds of the gears 8a to 8e computed in the rotation-speed computation task 21 are previously stored, together with the load of the engine sensed by an engine load sensor 17, in the form of a map in the memory. In the step 100 in Fig. 3, the above map is searched to select a gear considered to be most suitable or optimum under the present driving conditions of the vehicle. In the next step 101, judgment is made as to whether or not the present gear position coincides with the position of the gear selected in the step 100. When the result of judgment in the step 101 proves that the present gear position is optimum, that is, it coincides with the position of the gear selected in the step 100, a signal for de-energizing the corresponding actuator 9 is generated in the step 102 so as to maintain the present status without energizing the actuator 9. On the other hand, when the result of judgment in the step 101 proves that the present gear position does not coincide with the position of the gear selected in the step 100, the present gear position is regarded to be not optimum, and the step 103 is followed. The steps starting from the step 103 provide a routine in which a most suitable one of the actuators 9 is energized to attain the gear shift. In the step 103, judgment is made as to whether or not an NG flag is registered already. As described later, this NG flag is registered when, upon lapse of a predetermined length of time from the time of starting energization of the corresponding actuator 9 for attaining a shift from the neutral position to the gear position considered to be optimum, the gear shift cannot be confirmed by the shifted position sensor associated with the actuator 9. As far as this NG flag is registered, the desired gear shift is impossible, and it is necessary to restore the gear to the neutral position. Before execution of the routine for restoring the gear to the neutral position, judgment is made in the step 104 as to whether or not the gear shift is a retry. This retry is done when the gear selected to be optimum in the step 100 differs from the gear intended to be engaged due to the presence of the NG flag. In other words, when, in spite of energization of the corresponding actuator 9 so as to attain a shift to the gear considered to be optimum in the step 100, the engagement of the gear is not confirmed within the predetermined period of time, the gear shift is considered to be impossible, and the gear is restored to the neutral position, so that the drive power is not transmitted from the engine to the main shaft 4. Consequently, the speed of the vehicle decreases, and the rotation speed of the engine becomes lower than when the gear considered optimum is assumed to be engaged while the clutch is also assumed to be engaged. Therefore, the gear acting to increase the rotation speed of the engine is selected in the step 100 depending on the speed of the vehicle. The gear selected at this time differs from that considered to be optimum and intended to be engaged due to the presence of the NG flag, and whether or not the selected optimum gear is unable to attain the shift cannot be judged. Therefore, judgment is made in the step 104 as to whether or not the gear different from the gear intended to be engaged due to the presence of the NG flag is the optimum one. When the result of judgment in the step 104 proves that the gear considered to be optimum and intended to be engaged due to the presence of the NG flag coincides with the gear selected in the step 100, it does not indicate the retry, and a jump from the step 104 to a routine starting from the step 118 occurs to restore the gear to the neutral position. In the step 118, judgment is made as to whether or not each of the shifted position sensors 15a, 15b and 15c associated with the respective actuators 9a, 9b and 9c indicates that the corresponding clutch is in the neutral position. If any of these clutch gears 10a to 10c is not in its neutral position, and the neutral signal is not generated from the associated shifted position sensor, the present gear position is not neutral, and the corresponding clutch gear is judged to be shifted leftward or rightward already, in the step 122. In this step 122, the actuator 9 associated with the shifted position sensor 15, which does not generate the neutral signal, is only energized to restore the gear to the neutral position. Energization of the specific actuator 9 completes the task 22. The task 22 is started with the predetermined period as described already, so that the step 118 is executed again after the predetermined period of time to judge as to whether or not the present gear position is neutral. When the result of judgment in the step 118 proves that the present gear position is not yet neutral, energization of the specific actuator 9 is continued. On the other hand, when the result of judgment in the step 118 proves that all of the shifted position sensors 15 associated with the actuators 9 generate the neutral signals, and the clutch gears are in the neutral position, then, in the step 119, all of the actuators 9 are de-energized. In the next step 120, an N flag is cancelled. This N flag is a flag which is registered under the same condition as that for the NG flag. This N flag is registered when, upon lapse of a predetermined length of time from the time of energization of one of the actuators 9 for attaining a gear shift from the neutral to the gear considered to be optimum, the corresponding one of the shifted position sensors 14a, 14b and 14c associated with the respective actuators 9a, 9b and 9c fails to clearly indicate that the gear is shifted to the desired position. This N flag is also registered when any one of the gears is restored to its neutral position again in the routine run for attaining a gear shift to the optimum gear.

When the retry is judged in the step 104, the NG flag is cancelled in the step 105 so as to judge whether or not a gear shift to the newly selected optimum gear is possible. Since the NG flag is cancelled already in the step 105, the NG flag is not present in the step 103 when this task is executed next time. Thus, the judgment of retry in the step 104 in the next task becomes unnecessary. When the result of judgment in the step 103 proves that the NG flag is not registered or when the result of judgment in the step 104 proves that the gear selection is the retry in spite of the presence of the NG flag, a routine starting from the step 106 is executed to attain a gear shift to the selected optimum gear. In the step 106, judgment is made as to whether or not the NG flag is registered already. When the result of judgment in the step 106 proves that the NG flag is registered, it is necessary to set the gear in the neutral position, and a jump to the routine starting from the step 118 occurs for setting the gear in the neutral position. On the other hand, when the result of judgment in the step 106 proves that the NG flag is not registered, it is judged that the gear shift to the neutral position is not started yet or the N flag is cancelled after attainment of the gear shift to the neutral position, and the step 106 is followed by the step 107. In this step 107, whether or not the present gear position is neutral or has been shifted in the engaging direction is judged on the basis of the output signals of the shifted position sensors 15a, 15b and 15c associated with the respective actuators 9a, 9b and 9c. This judgment is made since, during a gear shift to the optimum gear, it is necessary to restore the presently engaging gear to the neutral position. When the result of judgment in the step 107 proves that the specific gear is not yet restored to the neutral position, a jump to the step 121 occurs, and the N flag is registered in the step 121 to complete this task. Due to the registration of the N flag, a jump from the step 106 to the neutral-restoring routine starting from the step 118 occurs during execution of the task at the next time, so as to energize the actuator 9 associated with the gear which has not been restored to its neutral position yet. On the other hand, when the result of the judgment in the step 107 proves that the gear position is now neutral, a shift to the optimum gear selected in the step 100 is possible. Thus, as soon as the rotation speed of the gear considered to be optimum and selected in the step 100 coincides (or is synchronized) substantially with the rotation speed of the main shaft 4, the selected clutch gear 10 shown in Fig. 1 is moved to couple the corresponding shift gear 8 to the main shaft 4. Therefore, the shift shock at that time is relatively small, thereby minimizing the danger of gear breakage. It becomes therefore necessary to compare the rotation speed of the shift gear 8 with that of the main shaft 4. In the step 108, the rotation speed of the gear to be shifted now and that of the main shaft 4 are read out from the memory. These rotation speeds read out from the memory are previously computed by the task 21 and are stored in the memory.

In the step 108, the rotation speed of the optimum gear and that of the main shaft 4 are only read out to be compared in the step 109. When the rotation speed difference between the optimum gear and the main shaft 4 lies within a predetermined range, the rotation speeds of them are regarded to be substantially equal to each other, or the gear rotation and the main shaft rotation are regarded to be substantially synchronized with each other, and the corresponding actuator 9 is energized to start a routiune for gear shifting. On the other hand, when the rotation speed difference between the optimum gear and the main shaft 4 does not lie within the predetermined range, they are regarded to be not synchronized, and the routine jumps to the step 102 where the actuator is de-energized to complete the task. Such a procedure is repeated until the synchronization is confirmed in the step 109, regardless of the number of times of execution of the task. When the synchronization is confirmed in the step 109, whether or not the actuator is being energized is judged in the step 110. This judgment is based on any one of methods. For example, when data are set in the unit 5 (which may be an IC) generating the control signal controlling the energization of the actuators 9, the same data may be stored in a memory, and the contents of the memory may be checked to judge as to whether or not the specific actuator is being energized. According to another method, a flag is registered for the purpose of the above judgment. Whether or not the specific actuator 9 is being energized is judged in the step 110 according to any one of the methods described above. When the result of judgment in the step 110 proves that the actuator 9 is not energized yet, the signal for shifting to the optimum gear is generated in the step 117 to start energization of the corresponding actuator 9. On the other hand, when the result of judgment in the step 110 proves that the specific actuator 9 is being energized, whether or not the gear shift is completed is judged in the step 111. That is, the step 111 judges as to whether or not the gear has been shifted to the optimum position as a result of energization of the actuator 9, on the basis of the output signal of the corresponding shifted position sensor 14. When it is proved that the specific shifted position sensor 14 generates its output signal indicative of the gear shift to the required position, it is judged that the gear shift is completed, and the energization of the specific actuator 9 is ceased in the step 102.

When, on the other hand, the gear shift to the desired position cannot be confirmed on the basis of the output signal of the shifted position sensor 14, the number of times of execution of the task from the time of starting energization of the actuator is counted in the step 112 to measure the length of time elapsed from the time of starting of energization of the actuator 9.

Suppose, for example, that this task is executed with the period of 20 ms. Then, when the task has been executed 50 times after the actuator 9 was initially energized, the length of time elapsed is $50 \times 20$ ms = 1,000 ms = 1 sec. When the counted number of times of execution of the task exceeds a predetermined setting, that is, when a predetermined period of time has elapsed after the initial energization of the actuator 9, it can be judged that the desired gear shift is impossible. When the result of judgment in the step 113 proves that the counted number of times of execution of the task does not exceed the predetermined setting, that is, the predetermined length of time is not exceeded, the task is completed without any further processing. On the other hand, when the result of judgment in the step 113 proves that the count exceeds the predetermined setting, the gear shift is judged to be impossible, and energization of the actuator 9 is ceased in the step 114 to cease the actuation for gear shifting to the desired position. Subsequently, the NG flag and N flag are registered in the steps 115 and 116 respectively, and the specific gear is restored to the neutral position until the gear shifting is retried in the step 104. In the manner described above, improper actuation by the actuator associated with the selected optimum gear under a situation in which the desired gear shift is impossible in spite of energization of the corresponding actuator, can be inhibited so that a serious trouble such as gear breakage can be prevented.

For attaining a gear shift to the optimum gear as described above, the gear presently engaged is disengaged and moved once to the neutral position, and, as soon as the rotation of the shift gear 8 is synchronized with that of the main shaft 4, the corresponding actuator 9 is energized. At this time, the input signals required to be applied to the transmission control unit 5 for attaining the gear shift include the signal indicative of the rotation speed of the reverse gear 2 and the signal indicative of the rotation speed of the main shaft 4, so as to judge whether or not the rotation of the gear 8 is synchronized with that of the main shaft 4. Also, the output signals of the shifted position sensors 14 and 15 are required to identify the gear position. However, even if a trouble such as wire disconnection or internal failure may occur in any one of the reverse-gear rotation-speed sensor 1, main-shaft rotation-speed sensor 3 and shifted position sensors 14 and 15, the transmission control unit 5 cannot directly detect the occurrence of such a trouble. Therefore, when a gear shift is made in a state in which any one of the various sensors is disabled, the gear shift may proceed before the rotation of the gear is synchronized with that of the main shaft 4, resulting in a possibility of giving rise to undesirable gear breakage. When the selected gear is in the desired position, the rotation speed of the selected gear should be equal to that of the main shaft 4. Therefore, when the rotation speed of the selected gear is not equal to that of the main shaft 4, it can be judged that any one of the sensors is disabled.

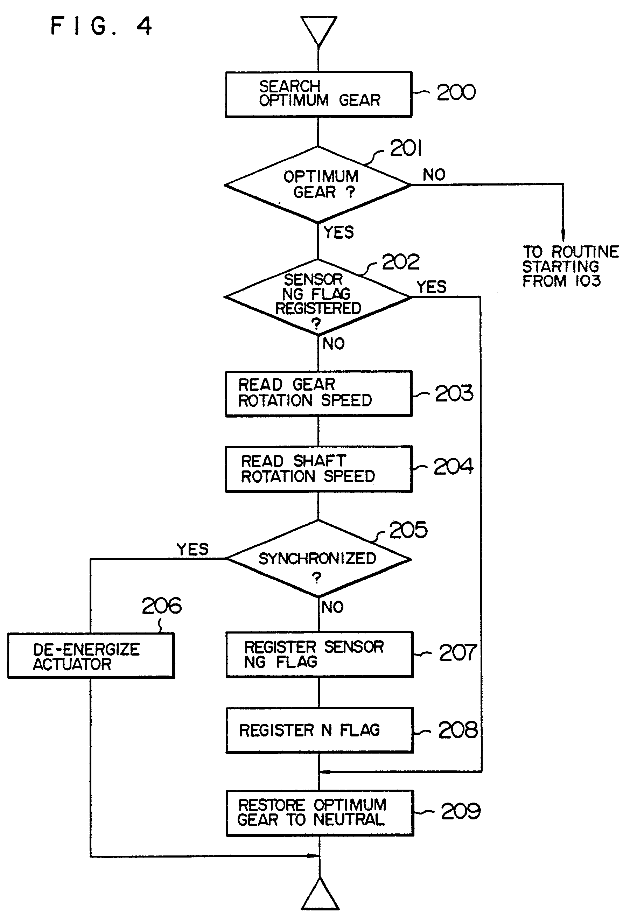

The flow chart shown in Fig. 4 shows a method preferably used for the judgment of such a trouble. As in the case of the step 100 shown in Fig. 3, the gear considered to be optimum in view of the conditions including the rotation speed of the main shaft 4 (the speed of the vehicle) and the rotation speed of the engine is selected in the step 200. Then, in the step 201, judgment is made as to whether or not the selected optimum gear coincides with the presently actually shifted gear. When the result of judgment in the step 201 proves that they do not coincide with each other, a processing routine similar to the routine starting from the step 103 shown in Fig. 3 is run. On the other hand, when the result of judgment in the step 201 proves that they coincide with each other, whether or not a sensor NG flag is registered is confirmed in the step 202. This sensor NG flag is registered when the rotation speed of the selected optimum gear when shifted is not equal to that of the main shaft 4. When the result of confirmation in the step 202 proves that this sensor NG flag is registered, a jump to the step 209 occurs. In the step 209, the gear selected to be optimum in the step 200 is specified to be shifted to the neutral position, and, when the task is executed next time, judgment is made in the step 201 as to whether or not the shifted gear is in the neutral position. On the other hand, when the result of confirmation in the step 202 proves that the sensor NG flag is not registered, whether or not the various sensors are abnormal is checked. First, in the step 203, the rotation speed of the presently shifted gear is read out from the memory which stores the results of computation by the task 21, and, in the next step 204, the rotation speed of the main shaft 4 is similarly read out from the memory. The two rotation speeds thus read out from the memory are then compared in the step 205 to judge whether or not the rotation of the gear is synchronized with the rotation of the main shaft 4. When the various sensors are normal, the rotation speed of the gear should be equal to that of the main shaft 4. The output signals of the rotation speed sensors may include errors, and errors may also be incurred during reading of the input data in the transmission control unit 5. Even, in such a case, the rotation speed of the gear should be substantially equal to that of the main shaft 4, and the rotation speed difference therebetween should lie within the predetermined range. Therefore, when the result of judgment in the step 205 proves that the rotation speed difference lies within the predetermined range, the various sensors are regarded to be normal, and, in the step 206, the transmission control unit 5 applies the actuator de-energizing signal. However, when the result of judgment in the step 205 proves that the rotation speed difference between the gear and the main shaft 4 does not lie within the predetermined range, it indicates that a trouble such as wire disconnection or internal failure has occurred in any one of the rotation speed sensors or shifted position sensors. The sensor NG flag is registered in the step 207, and the N flag is registered in the step 208. This N flag is registered for restoring the gear to the neutral position as described with reference to Fig. 3 in which the judgment of registration of the N flag in the step 106 is followed by the routine starting from the step 118 for restoring the gear to the neutral position. Also, the sensor NG flag is registered so that, after any one of the sensors has been judged to be abnormal and the gear has been restored to the neutral position, a gear shift to another gear may not occur with the sensor remaining in the abnormal condition. Thus, when the task is executed next time, registration of the sensor NG flag is confirmed in the step 202. Then, in the step 209, the selected optimum gear is specified to be restored to the neutral position, and the task is completed without any actuation by the associated actuator. After registration of the flags in the steps 207 and 208, the selected optimum gear is specified to be restored to the neutral position in the step 209. When the task is executed next time, the gear specified to be restored to the neutral position is selected as the optimum gear in the step 200. In the manner described above, an abnormal sensor among the various sensors can be detected, and the selected gear is restored to the neutral position, so as to avoid danger such as gear breakage due to a forced gear shift irrespective of the presence of the abnormal sensor.

It will be understood from the foregoing detailed description of the present invention that the apparatus can control the transmission to ensure the safety of operation by detecting an unusual state such as the impossibility of a gear shift or the presence of an abnormal sensor among the various sensors.

**Claim**

A transmission control apparatus comprising: main-shaft rotation-speed sensor means (3, 21) for sensing the rotation speed of a main shaft (4);

gear rotation-speed sensor means (1, 21) for sensing the rotation speed of a plurality of shift gears (8a—8e);

means (17) for sensing the load of an engine;

means (100, 200) for searching an optimum one of said shift gears on the basis of the data derived from said main-shaft rotation-speed sensor means, said gear rotation-speed sensor means and said engine load sensor means;

actuators (9a, 9b, 9c) for selectively shifting clutch gear means (10a, 10b, 10c) respectively so that said main shaft can be coupled to said optimum shift gear selected by said searching means;

shifted position sensor means (14a—14f, 15a—15c) for sensing the meshing positions of said clutch gear means respectively;

means (111—116, 200—208) for judging as to whether the shifting operation of said actuators and any one of said main-shaft rotation-speed sensor means, said gear rotation-speed sensor means and said shifted position sensor means is abnormal; and

neutral-restoring means (103, 104, 118—122, 200, 209) for energizing, upon judgment of an abnormal condition by said judging means, said actuator associated with said clutch gear means engaging with said selected optimum shift gear, thereby restoring said clutch gear means to the neutral position, characterized in that

the judging means (200—208) includes means (200, 201) for confirming that the selected optimum shift gear is now engaged by said clutch gear means, and means (205) for deciding that the gear shift is abnormal when, in spite of the confirmation of the engagement by said confirming means, the rotation speed of said main shaft sensed by said main-shaft rotation-speed sensor means and that of the optimum shift gear sensed by said gear rotation-speed sensor means are not substantially equal to each other.

**Patentanspruch**

Getriebesteuerung, umfassend:

Hauptwellendrehzahl-Fühler (3, 21) zur Erfassung der Drehzahl einer Hauptwelle (4);

Schaltzahnraddrehzahl-Fühler (1, 21) zur Erfassung der Drehzahl einer Mehrzahl Schaltzahnräder (8a—8e);

einen Fühler (17) zur Erfassung der Last eines Motors;

Mittel (100, 200), die unter den Schaltzahnrädern ein optimales Schaltzahnrad auf der Grundlage der von den Hauptwellendrehzahl-Fühlern, den Schaltzahnraddrehzahl-Fühlern und dem Motorlastfühler abgeleiteten Information suchen;

Stelleinheiten (9a, 9b, 9c), die Kupplungsräder (10a, 10b, 10c) selektiv jeweils so verschieben, daß die Hauptwelle mit dem von den Suchmitteln ausgewählten optimalen Schaltzahnrad verbindbar ist;

Schaltstellungsfühler (14a—14f, 15a—15c), die die Eingriffslagen der jeweiligen Kupplungsräder erfassen;

Mittel (111—116, 200—208), die entscheiden, ob die Schaltbetätigung der Stelleinheiten und der Hauptwellendrehzahl-Fühler, der Schaltzahnraddrehzahl-Fühler und der Schaltstellungsfühler abnorm ist; und

Neutralstellungs-Rückstellmittel (103, 104, 118—122, 200, 209), die bei Feststellung eines abnormen Zustands durch die Entscheidungsmittel die Stelleinheit aktivieren, die dem Kupplungsrad zugeordnet ist, mit dem sich das ausgewählte optimale Schaltzahnrad in Eingriff befindet, wodurch das Kupplungsrad in die Neutrallage rückgestellt wird, dadurch gekennzeichnet, daß

die Entscheidungsmittel (200—208) aufweisen: Mittel (200, 201), die bestätigen, daß das ausgewählte optimale Schaltzahnrad nunmehr mit dem Kupplungsrad in Eingriff steht, und Mittel (205), die entscheiden, daß der Schaltzustand abnorm ist, wenn ungeachtet der Bestätigung des Eingriffs durch die Bestätigungsmittel die von den Hauptwellendrehzahl-Fühlern erfaßte Drehzahl der Hauptwelle und die von den Schaltzahnraddrehzahl-Fühlern erfaßte Schaltzahnraddrehzahl nicht im wesentlichen gleich sind.

**Revendication**

Dispositif de commande d'une transmission, comprenant:

des moyens (3, 21) formant détecteur de la vitesse de rotation d'un arbre principal, servant à détecter la vitesse de rotation d'un arbre principal (4);

des moyens (1, 21) formant détecteur de la vitesse de rotation de pignons, servant à détecter la vitesse de rotation d'une pluralité de pignons de changement de vitesse (8a—8e);

des moyens (17) servant à détecter la charge d'un moteur;

des moyens (100, 200) servant à rechercher un pignon optimum parmi lesdits pignons de changement de vitesse sur la base des données dérivées desdits moyens formant détecteur de la vitesse de rotation de l'arbre principal, desdits moyens formant détecteur de la vitesse de rotation des pignons et desdits moyens formant détecteur de charge du moteur;

des actionneurs (9a, 9b, 9c) permettant de déplacer respectivement de façon sélective des moyens en forme de pignons d'embrayage (10a, 10b, 10c) de sorte que ledit arbre principal peut être accouplé audit pignon optimum de changement de vitesse à l'aide desdits moyens de recherche;

des moyens (14a—14f, 15a—15c) formant détecteur de positions décalées, servant à détecter respectivement les positions d'engrènement desdits moyens en forme de pignons d'embrayage;

des moyens (111—116, 200—208) servant à évaluer si l'opération de changement de vitesse réalisée par lesdits actionneurs et l'un quelconque desdits moyens formant détecteur de la vitesse de rotation de l'arbre principal, desdits moyens formant détecteur de la vitesse de rotation des pignons et desdits moyens formant détecteur de positions décalées est anormale; et

des moyens (103, 104, 118—122, 200, 209) de retour dans la position neutre, servant à activer, dans le cas de l'évaluation d'un état anormal par lesdits moyens d'évaluation, ledit actionneur associé auxdits moyens formant pignon d'embrayage engrenant avec ledit pignon optimum sélectionné de changement de vitesse, de manière à ramener lesdits moyens formant pignon d'embrayage dans la position neutre, caractérisé en ce que

les moyens d'évaulation (200—208) comprennent des moyens (200, 201) servant à confirmer que lesdits moyens formant pignon d'embrayage engrènent maintenant avec le pignon optimum sélectionné de changement de vitesse et des moyens (205) servant à décider que le changement de vitesse est anormal lorsque, en dépit de la confirmation de l'engrènement, fournie par lesdits moyens de confirmation, la vitesse de rotation dudit arbre principal détectée par lesdits moyens formant détecteur de la vitesse de rotation de l'arbre principal et la vitesse de rotation du pignon optimum de changement de vitesse, détectée par lesdits moyens formant détecteur de la vitesse de rotation des pignons, ne sont pas sensiblement identiques entre elles.

# F I G . 1

Figure 1 labels: 15a, 14a, 14b, 15b, 14c, 14d, 15c, 14e, 14f, 13a, 13b, 13c, 12a, 9a ACTUATOR, 12b, 9b ACTUATOR, 12c, 9c ACTUATOR, TRANSMISSION CONTROL UNIT, 5, 1 SPEED SENSOR, 8e, 8a, 8b, 8c, 8d, 3 SPEED SENSOR, 2, 4, 10a, 10b, 10c, 6, 7a, 7, 17, ENGINE LOAD SENSOR

# F I G . 2

Figure 2 labels: TASK DISPATCHER 20, ROTATION-SPEED COMPUTATION TASK 21, GEAR SHIFT TASK 22, TROUBLE DISPLAY TASK 23

FIG. 3

0 161 521

FIG. 4

SEARCH OPTIMUM GEAR — 200

OPTIMUM GEAR ? — 201
NO → TO ROUTINE STARTING FROM 103
YES

SENSOR NG FLAG REGISTERED ? — 202
YES
NO

READ GEAR ROTATION SPEED — 203

READ SHAFT ROTATION SPEED — 204

SYNCHRONIZED ? — 205
YES
NO

DE-ENERGIZE ACTUATOR — 206

REGISTER SENSOR NG FLAG — 207

REGISTER N FLAG — 208

RESTORE OPTIMUM GEAR TO NEUTRAL — 209

3